# EUROPÄISCHE PATENTSCHRIFT

(11) **EP 1 211 220 B1**
(45) Veröffentlichungstag und Bekanntmachung des Hinweises auf die Patenterteilung: **30.03.2005**
(21) Anmeldenummer: 01126914.9
(22) Anmeldetag: 13.11.2001
(51) Int. Cl.: C01B 25/00

(54) **Stabilisierter roter Phosphor und ein Verfahren zu seiner Herstellung**
Stabilized red phosphorus and process for its preparation
Phosphore rouge stabilisé et procédé pour sa préparation

(30) Priorität: 28.11.2000 DE 10058922
(43) Veröffentlichungstag der Anmeldung: 05.06.2002
(73) Patentinhaber: Clariant GmbH, 65929 Frankfurt am Main (DE)
(72) Erfinder: Hörold, Sebastian, Dr., 50374 Erftstadt (DE); Laubner, Jürgen, 50997 Köln (DE)
(74) Vertreter: Clariant Service GmbH

(56) Entgegenhaltungen:
- EP-A- 0 176 836
- EP-A- 0 911 366
- US-A- 4 242 240
- US-A- 4 440 880
- US-A- 4 853 288
- US-A- 5 049 599
- US-A- 5 093 199

## Beschreibung

Die Erfindung betrifft einen stabilisierten, pulverförmigen roten Phosphor aus Phosphorteilchen mit einer Teilchengröße von höchstens 2 mm, deren Oberfläche mit einer dünnen Schicht eines Oxidationsstabilisators bedeckt ist, sowie ein Verfahren zu seiner Herstellung und seine Verwendung.

Bekanntlich wird der rote Phosphor durch die thermische Umwandlung des gelben Phosphors in die stabilere rote Modifikation erhalten. Hierbei bildet der rohe rote Phosphor mit einem Gehalt von etwa 0,5 - 1,5 Gew.-% gelbem Phosphor nach Beendigung der Reaktion eine kompakte Masse. Er wird unter Inertgasatmosphäre vermahlen und in wässriger Suspension durch Kochen mit verdünnter Natronlauge vom gelben Phosphor befreit. Die Umwandlung wird in der Regel in rotierenden Reaktoren vorgenommen, wobei der rote Phosphor als Pulver anfällt.

Die aus dem Reaktor entnommene wässrige Suspension von rotem Phosphor wird in Rührgefäßen mit Dampf aufgeheizt und durch portionsweise Zugabe von Natronlauge vom Restanteil von etwa 0,1 Gew.-% gelbem Phosphor befreit.

Roter Phosphor wird in der Pyrotechnik sowie bei der Herstellung von Zündholzreibflächen benötigt und findet Anwendung als Flammschutzmittel für Kunststoffe, wie z. B. Polyamide oder Polyurethane.

Bekanntlich findet in feuchter Atmosphäre an der Oberfläche von rotem Phosphor eine chemische Reaktion statt, bei der durch Oxidation und Disproportionierung verschiedene Säuren des Phosphors in den Oxidationsstufen +1 bis +5 und Phosphorwasserstoff (PH₃) gebildet werden.

Phosphorwasserstoff ist ein giftiges Gas, der MAK-Wert beträgt 0,1 ppm. Geringe Konzentrationen werden durch knoblauchartigen Geruch wahrgenommen (die Geruchsschwelle beträgt 0,02 ppm). Die verschiedenen Säuren des Phosphors führen in Pyrotechnik und Flammschutz-Anwendungen zu Korrosionsproblemen, insbesondere von Kupfer.

Es bestand somit die Aufgabe, die unzureichende Oxidationsstabilität des roten Phosphors durch geeignete Stabilisierungsmaßnahmen zu verbessern. Hierbei wird unter dem Begriff "Stabilisierung" eine Maßnahme verstanden, die dem roten Phosphor einen besseren Schutz gegen atmosphärische Einflüsse verleiht und so beispielsweise bei der Lagerung oder der weiteren Verarbeitung zu einer geringeren Bildung von Oxosäuren des Phosphors und von Phosphorwasserstoff beiträgt.

Aus der EP-0 378 803 B1 (DE-PS 39 00 965) ist bekannt, dass die Oxidationsstabilität des roten Phosphors durch Auffällen von Zinnoxidhydrat verbessert werden kann.

In der EP-0 028 744 B1 (DE-PS 29 45 118) wird vorgeschlagen, zur Stabilisierung des roten Phosphors eine Kombination aus Aluminiumhydroxid und gehärtetem Epoxidharz zu verwenden.

In der EP-0 283 759 B1 (US-PS 4,853,288) wird ein stabilisierter, pulverförmiger roter Phosphor aus Phosphorteilchen mit einer Teilchengröße von höchstens 2 mm beschrieben, deren Oberfläche mit einer dünnen Schicht eines Oxidationsstabilisators bedeckt ist, der aus mindestens einem in Wasser schweroder unlöslichen Metallhydroxid und aus einem Polykondensationsprodukt aus Melamin und Formaldehyd besteht. Die in den dortigen Beispielen 17 und 18 beschriebenen Kombinationen von Zinnoxidhydrat und Melamin-Formaldehyd-Harz liefern bereits gute Werte bei der Oxidationsstabilität.

Dennoch besteht weiterhin Bedarf an Phosphor-Rot Produkten mit verbesserter Oxidationsstabilität, da insbesondere bei der Verarbeitung je nach Temperatur und Feuchtigkeitsgehalt der Raumluft die Geruchsschwellen für Phosphin überschritten werden können.

Einen Versuch, Phosphin zu binden, enthält die DE-OS 2 308 104. Sie beschreibt Formmassen aus thermoplastischen Kunststoffen, rotem Phosphor und dem Zusatz einer phosphinbindenden Substanz. Als phosphinbindende Substanzen werden MoS₂, PbO₂, AgNO₃, HgCl₂, FeCl₃, CuO und Aktivkohle genannt. Der rote Phosphor wird dabei mit der phosphinbindenden Substanz vermischt und in das jeweilige Polymer eingearbeitet. Der Nachteil dieses Verfahrens sind in der Zugabe der phosphinbindenden Substanz als weiteres Additiv zu sehen: Die Wasserlöslichkeit der genannten Verbindungen ist teilweise sehr hoch, die Polymerverträglichkeit unzureichend und die thermische Stabilität gering.

Daher bestand die Aufgabe, eine weitere Verbesserung der Oxidationsstabilität zu erreichen. Überraschenderweise wurde nun gefunden, dass die Oxidationsstabilität des roten Phosphors durch Aufbringen von metallischem Silber, insbesondere in Kombination mit einem Metallhydroxid und einem ausgehärteten duroplastischen Kunstharz, deutlich verbessert werden kann.

Der Effekt der Erfindung kann gegebenenfalls noch verstärkt werden, wenn nach dem Verfahren der EP-0 176 836 B1 (DE-OS 34 36 161) zusätzlich noch ein Phlegmatisierungsmittel aufgebracht wird.

In diesem Zusammenhang wird unter dem Begriff "Phlegmatisierung" eine Maßnahme verstanden, durch die die Neigung des roten Phosphors zur Staubbildung reduziert wird, wodurch die Gefahr des Entstehens von Staubexplosionen sinkt und die Verarbeitungssicherheit steigt.

Die Erfindung betrifft daher einen stabilisierten, pulverförmigen roten Phosphor der Eingangs genannten Art, dadurch gekennzeichnet, dass es sich bei dem Oxidationsstabilisator um Silber handelt.

Bevorzugt enthält der stabilisierte, pulverförmige rote Phosphor 0,05 bis 2, besonders bevorzugt 0,1 bis 0,4 Gew.-% Silber.

Bevorzugt enthält der stabilisierte, pulverförmige rote Phosphor zusätzlich einen Stabilisator.

Bevorzugt handelt es sich bei dem zusätzliche Stabilisator um ein Metallhydroxid.

Bevorzugt werden als Ausgangsprodukte für das Metallhydroxid die Hydroxide, Oxidhydrate und/oder Oxide von Aluminium, Silicium, Titan, Chrom, Mangan, Zink, Germanium, Zirkon, Niob, Cadmium, Zinn, Blei, Wismut und/oder Cer eingesetzt.

Bevorzugt enthält der rote Phosphor die Metallhydroxide in Mengen von 0,5 bis 10, besonders bevorzugt 1 bis 3 Gew.-%.

Bevorzugt ist der stabilisierte, pulverförmige rote Phosphor mit einem duroplastischen Kunstharz mikroverkapselt.

Bevorzugt handelt sich bei dem duroplastischen Kunststoff um Epoxidharze, Melaminharze, Phenolharze oder Polyurethane.

Bevorzugt enthält der stabilisierte, pulverförmige rote Phosphor die duroplastischen Kunststoffe in Mengen von 0,2 bis 10, insbesondere von 0,5 bis 8 und besonders bevorzugt von 2 bis 5 Gew.-%.

Bevorzugt ist der stabilisierte, pulverförmige rote Phosphor von einer dünnen Schicht eines Phlegmatisierungsmittel bedeckt.

Bevorzugt handelt es sich bei dem Phlegmatisierungsmittel um eine wasseremulgierbare organische Verbindung.

Bevorzugt handelt es sich bei dem Phlegmatisierungsmittel um Di-2-ethylhexylphthalat oder um Polyglykole.

Bevorzugt enthält der stabilisierte, pulverförmige rote Phosphor das Phlegmatisierungsmittel in Mengen von 0,05 bis 2, besonders bevorzugt 0,3 bis 1,5 Gew.-%.

Insbesondere betrifft die Erfindung einen stabilisierten, pulverförmigen roten Phosphor, dadurch gekennzeichnet, dass er
76 bis 99,2 Gew.-% roten Phosphor,
0,05 bis 2 Gew.-% Silber,
0,5 bis 10 Gew.-% Metallhydroxid,
0,2 bis 10 Gew.-% duroplastisches Kunstharz und
0,05 bis 2 Gew.-% Phlegmatisierungsmittel enthält.

Die Erfindung betrifft auch ein Verfahren zur Herstellung eines stabilisierten, pulverförmigen roten Phosphors, dadurch gekennzeichnet, dass man nacheinander
a) in eine wässrige Suspension des (unbehandelten) roten Phosphors eine wasserlösliche Silberverbindung einrührt und den pH auf 7 einstellt;
b) in diese Suspension eine wasserlösliche Metallverbindung einrührt und den pH auf einen Wert von 4 bis 9 einstellt und noch 0,5 bis 3 Stunden bei 40 bis 80 °C rührt;
c) dann eine wässrige Emulsion eines Epoxidharzes und eines Epoxidharz-Härters zufügt und noch 0,5 bis 3 Stunden bei 40 bis 80 °C rührt;
d) eine wässrige Emulsion der als Phlegmatisierungsmittel dienenden wasseremulgierbaren organischen Verbindung zufügt und den pH auf einen Wert von 5 bis 9 einstellt und noch 0,5 bis 3 Stunden bei 20 bis 90 °C rührt und
e) anschließend das Produkt filtriert und bei Temperaturen von 80 bis 150 °C trocknet.

In einer besonderen Ausführungsform der Erfindung filtriert man die nach Schritt a) erhaltene Emulsion und trocknet den als Produkt erhaltenen silberhaltigen roten Phosphor bei Temperaturen von 80 bis 150 °C.

In einer anderen Ausführungsform der Erfindung führt man nur die Schritte a) und b) aus und trocknet den als Produkt erhaltenen silberhaltigen, mit einem Metallhydroxid stabilisierten roten Phosphor bei Temperaturen von 80 bis 150 °C.

In einer weiteren Ausführungsform der Erfindung führt man die Schritte a) bis c) aus und trocknet den als Produkt erhaltenen silberhaltigen, mit einem Metallhydroxid und einem duroplastischen Kunstharz stabilisierten roten Phosphor bei Temperaturen von 80 bis 150 °C.

Alternativ kann man auch nur die Schritte a), b) und d) ausführen und den als Produkt erhaltenen silberhaltigen, mit einem Metallhydroxid stabilisierten und mit einem Phlegmatisierungsmittel versehenem roten Phosphor bei Temperaturen von 80 bis 150 °C trocknen.

Die Erfindung betrifft auch ein Verfahren zur Herstellung eines stabilisierten, pulverförmigen roten Phosphors, dadurch gekennzeichnet, dass man jeweils und wahlweise
76 bis 99,2 Gew.-% roten Phosphor,
0,05 bis 2 Gew.-% wasserlösliche Silberverbindung,
0,5 bis 10 Gew.-% Metallhydroxid, Metalloxidhydrat oder Metalloxid
0,2 bis 10 Gew.-% duroplastisches Kunstharz und
0,05 bis 2 Gew.-% Phlegmatisierungsmittel
einsetzt.

Schließlich betrifft die Erfindung die Verwendung des stabilisierten, pulverförmigen roten Phosphors als Flammschutzmittel oder zur Herstellung von Flammschutzmitteln.

Das Verfahren zur Herstellung des stabilisierten, pulverförmigen roten Phosphors kann beispielsweise so ausgeführt werden, indem man in eine wässrige Suspension des roten Phosphors eine wasserlösliche Silberverbindung einrührt und den pH-Wert auf 7 einstellt, anschließend eine wasserlösliche Zinnverbindung einrührt, einen pH-Wert von 4 bis 9 einstellt und während 0,5 bis 3 Stunden bei einer Temperatur von 40 bis 80 °C rührt, darauf hin eine wässrige Emulsion des Epoxidharzes und des Härters zufügt und während 0,5 bis 3 Stunden bei einer Temperatur von 40 bis 80 °C rührt, derart, dass auf 76 bis 99,2 Gew.-% roten Phosphor 0,05 bis 2 Gew.-% Silber, 10 bis 0,5 Gew.-% Zinnoxidhydrat, berechnet als SnO, und unter 10 bis 0,2 Gew.-% Epoxidharz oder Melaminharz kommen; und dass man schließlich die Phosphorteilchen abfiltert und bei erhöhter Temperatur trocknet.

Das Verfahren zur Herstellung des stabilisierten und phlegmatisierten, pulverförmigen roten Phosphors kann auch so ausgeführt werden, dass man in eine wässrige Suspension des roten Phosphors eine wasserlösliche Silberverbindung und anschließend eine wasserlösliche Zinnverbindung einrührt, einen pH-Wert von 4 bis 9 einstellt, während 0,5 bis 3 Stunden bei einer Temperatur von 40 bis 80 °C rührt, anschließend eine wässrige Emulsion des Epoxidharzes oder eine Lösung des Epoxidharzes in einem mit Wasser mischbaren Lösemittel zufügt, während 0,5 bis 3 Stunden bei einer Temperatur von 40 bis 80 °C rührt, darauf hin gegebenenfalls eine wässrige Emulsion von Dl-2-ethylhexylphthalat zusetzt und während 0,5 bis 3 Stunden bei einer Temperatur von 20 bis 90 °C rührt, derart, dass auf 76 bis 99,2 Gew.-% roten Phosphor 0,05 bis 2 Gew.-% Silber, 10 bis 0,5 Gew.-% Zinnoxidhydrat, berechnet als SnO, 10 bis 0,2 Gew.-% Epoxidharz und 2 bis 0,05 Gew.-% Di-2-ethylhexylphthaiat kommen; und dass man schließlich die Phosphorteilchen abfiltriert und bei erhöhter Temperatur trocknet.
Die abschließende Trocknung der abfiltrierten Phosphorteilchen kann bevorzugt bei einer Temperatur von 80 bis 120 °C im Stickstoffstrom erfolgen.

Als mit Wasser mischbares Lösemittel kommen bevorzugt Aceton, Methanol oder Ethanol in Frage.

Die bevorzugte Teilchengröße des pulverförmigen roten Phosphors sind beispielsweise Bereiche von 0,1 bis 500 µm und besonders bevorzugt von 0,1 bis 150 µm.

Die nachfolgenden Ausführungsbeispiele und Tabellen dienen der näheren Erläuterung der Erfindung. Die Prozentangaben sind Gew.-%.

### Bestimmung der Oxidationsstabilität

Die Bestimmung der Oxidationsstabilität wurde nach einem Feucht/Warm-Lagerungstest durchgeführt. Hierzu wurden 5,0 g roter Phosphor (Teilchengröße: 100 % < 150 µm) in eine Kristallisierschale mit einem Durchmesser von 50 mm eingewogen und die Schale in einem geschlossenen Glasgefäß bei 80 °C und 100% relativer Luftfeuchtigkeit gelagert Der hierbei gebildete Phosphorwasserstoff wurde entweder durch einen Luftstrom (10 l/h) aus dem Glasgefäß ausgetrieben, in einer Gaswaschflasche mit 2,5 %iger Quecksilber(II)chloridlösung zur Reaktion gebracht und die Menge der dabei entstandenen Salzsäure titrimetrisch bestimmt oder mit Hilfe eines Dräger-Röhrchens "Phosphorwasserstoff 0,1/a" oder "50/a" erfasst.

Zur Bestimmung des Gehaltes an den verschiedenen Oxosäuren des Phosphors wurde die Phosphorprobe in ein 250-ml-Becherglas übergeführt, mit 200 ml 1 %iger Salzsäure versetzt, 10 Minuten zum Sieden erhitzt und anschließend filtriert. Im Filtrat erfolgte dann die Bestimmung des säurelöslichen Phosphors nach der photometrischen Molybdato-Vanadato- Phosphorsäure-Methode.

Zur Bestimmung des Ausgangswertes an säurelöslichem Phosphor wird der rote Phosphor dem gleichen Analysenverfahren ohne vorausgegangene Feucht/Warm-Lagerung unterzogen. Dieser Wert wird dann bei der Ermittlung des Gehalts an säurelöslichem Phosphor nach der Feucht-Warm-Lagerung abgezogen.

### Verwendete Materialien:

Epoxidharz: Beckopox EP 140, Bisphenol-A-bisglycidylester, EP-Wert 0,54 mol/100g, Polyaminhäter EH 623w, wasserverdünnbarer Aminhärter, Fa. Vianova Resins GmbH, Mainz
Melaminharz: Madurit MW 909, teilverethertes Melamin-Formaldehyd-Harz, wasserlösliches Pulver, Vianova Resins GmbH, Mainz

### Beispiel 1 (Erfindung)

2000 ml einer wässrigen Phosphor-Rot-Suspension mit einem Gehalt von 1000 g Phosphor-Rot werden in einem Rührreaktor aus Glas auf 60 °C erwärmt. Der pH-Wert der Suspension wird auf 7 eingestellt. Dann wird eine Lösung von 1,6 g Silbernitrat in 20 ml Wasser eingerührt, der pH-Wert wird auf 7 gehalten. Anschließend wird bei pH 7 für eine Stunde bei 60 °C gerührt. Nach der Filtration wird der Filterkuchen mit Wasser gewaschen und bei 120 °C im Stickstoffstrom getrocknet. Der Phosphorgehalt beträgt 99,8 %.

### Beispiel 2 (Erfindung)

2000 ml einer wässrigen Phosphor-Rot-Suspension mit einem Gehalt von 1000 g Phosphor-Rot werden in einem Rührreaktor aus Glas auf 60 °C erwärmt. Der pH-Wert der Suspension wird auf 7 eingestellt. Dann wird eine Lösung von 3,2 g Silbernitrat in 20 ml Wasser eingerührt, der pH-Wert wird auf 7 gehalten. Anschließend wird bei pH 7 für eine Stunde bei 60 °C gerührt.
Nach der Filtration wird der Filterkuchen mit Wasser gewaschen und bei 120 °C im Stickstoffstrom getrocknet. Der Phosphorgehalt beträgt 99,6 %.

### Beispiel 3 (Erfindung)

2000 ml einer wässrigen Phosphor-Rot Suspension mit einem Gehalt von 1000 g Phosphor-Rot werden in einem Rührreaktor aus Glas auf 60 °C erwärmt. Der pH-Wert der Suspension wird auf 7 eingestellt. Dann wird eine Lösung von 4,8 g Silbernitrat in 20 ml Wasser eingerührt, der pH-Wert wird auf 7 gehalten. Anschließend wird bei pH 7 für eine Stunde bei 60 °C gerührt.
Nach der Filtration wird der Filterkuchen mit Wasser gewaschen und bei 120°C im Stickstoffstrom getrocknet. Der Phosphorgehalt beträgt 99,4 %.

### Beispiel 4 (Erfindung)

2000 ml einer wässrigen Phosphor-Rot-Suspension mit einem Gehalt von 1000 g Phosphor-Rot werden in einem Rührreaktor aus Glas auf 60 °C erwärmt. Der pH-Wert der Suspension wird auf 7 eingestellt. Dann wird eine Lösung von 3,2 g Silbernitrat in 20 ml Wasser eingerührt, der pH-Wert wird auf 7 gehalten, Anschließend wird bei pH 7 für eine Stunde bei 60 °C gerührt. Der pH-Wert wird durch Zugabe von 5 %iger Schwefelsäure auf 5 eingestellt. Danach werden 48 g SnSO₄ in 200 ml Wasser dazugeben und es wird 20 min bei 60 °C gerührt.
Nach der Filtration wird der Filterkuchen mit Wasser gewaschen und bei 120 °C im Stickstoffstrom getrocknet. Der Phosphorgehalt beträgt 97,8 %.

### Beispiel 5 (Erfindung)

2000 ml einer wässrigen Phosphor-Rot-Suspension mit einem Gehalt von 1000 g Phosphor-Rot werden in einem Rührreaktor aus Glas auf 60 °C erwärmt. Der pH-Wert der Suspension wird auf 7 eingestellt. Dann wird eine Lösung von 3,2 g Silbernitrat in 20 ml Wasser eingerührt, der pH-Wert wird auf 7 gehalten. Anschließend wird bei pH 7 für eine Stunde bei 60 °C gerührt. Der pH-Wert wird durch Zugabe von 5 %iger Schwefelsäure auf 3 eingestellt. Danach werden 99,2 g MgSO₄*H₂O in 200 ml Wasser dazugeben, der pH-Wert auf 12 eingestellt und 20 min bei 60 °C gerührt.
Nach der Filtration wird der Filterkuchen mit Wasser gewaschen und bei 120 °C im Stickstoffstrom getrocknet. Der Phosphorgehalt beträgt 97,8 %.

### Beispiel 6 (Erfindung)

2000 ml einer wässrigen Phosphor-Rot-Suspension mit einem Gehalt von 1000 g Phosphor-Rot werden in einem Rührreaktor aus Glas auf 60 °C erwärmt. Der pH-Wert der Suspension wird auf 7 eingestellt. Dann wird eine Lösung von 3,2 g Silbernitrat in 20 ml Wasser eingerührt, der pH-Wert wird auf 7 gehalten. Anschließend wird bei pH 7 für eine Stunde bei 60 °C gerührt. Der pH-Wert wird durch Zugabe von 5 %iger Schwefelsäure auf 3 eingestellt. Danach werden 246 g Al₂(SO₄)₃*18 H₂O in 200 ml Wasser dazugeben, der pH-Wert auf 7 eingestellt und 20 min bei 60 °C gerührt.
Nach der Filtration wird der Filterkuchen mit Wasser gewaschen und bei 120 °C im Stickstoffstrom getrocknet. Der Phosphorgehalt beträgt 97,8 %.

### Beispiel 7 (Erfindung)

2000 ml einer wässrigen Phosphor-Rot-Suspension mit einem Gehalt von 1000 g Phosphor-Rot werden in einem Rührreaktor aus Glas auf 60°C erwärmt. Der pH-Wert der Suspension wird auf 7 eingestellt. Dann wird eine Lösung von 3,2 g Silbernitrat in 20 ml Wasser eingerührt, der pH-Wert wird auf 7 gehalten. Anschließend wird bei pH 7 für eine Stunde bei 60°C gerührt. Der pH-Wert wird durch Zugabe von 5 %iger Schwefelsäure auf 5 eingestellt. Danach werden 48 g SnSO₄ in 200 ml Wasser dazugeben und es wird 20 min bei 60°C gerührt.
Dann wird eine wässrige Emulsion eines wasseremulgierbaren Epoxidharzes und eines wasseremulgierbaren Polyaminhärters (20 g Beckopox EP 122w und 20 g Beckopox EH 623w) eingerührt und eine Stunde bei ca. 60°C Rühren gelassen, anschließend werden nochmals 20 g Beckopox EP 122w und 20 g Beckopox EH 623w in Wasser emulgiert und zugegeben, nochmals ca. 1 h bei 60°C gerührt und abfiltriert.
Nach der Filtration wird der Filterkuchen mit Wasser gewaschen und bei 120°C im Stickstoffstrom getrocknet. Der Phosphorgehalt beträgt 91,0 %.

### Beispiel 8 (Erfindung)

2000 ml einer wässrigen Phosphor-Rot-Suspension mit einem Gehalt von 1000 g Phosphor-Rot werden in einem Rührreaktor aus Glas auf 60°C erwärmt. Der pH-Wert der Suspension wird auf 7 eingestellt. Dann wird eine Lösung von 3,2 g Silbernitrat in 20 ml Wasser eingerührt, der pH Wert wird auf 7 gehalten. Anschließend wird bei pH 7 für eine Stunde bei 60°C gerührt. Der pH-Wert wird durch Zugabe von 5 %iger Schwefelsäure auf 5 eingestellt. Danach werden 48 g SnSO₄ in 200 ml Wasser dazugeben und es wird 20 min bei 60°C gerührt.
Dann wird eine wässrige Lösung eines Melaminharzes (40 g Madurit MW 909) eingerührt und der pH-Wert mit verdünnter Schwefelsäure auf 4,5 eingestellt. Nach einer Stunde Rühren bei 60°C werden weitere 40 g Madurit MW 909 in ca. 100 ml Wasser gelöst dazugegeben. Nach einer Stunde Rühren bei pH 4,5 und 60°C wird abfiltriert.
Nach der Filtration wird der Filterkuchen mit Wasser gewaschen und bei 120°C im Stickstoffstrom getrocknet. Der Phosphorgehalt beträgt 89,8 %.

### Beispiel 9 (Vergleichsbeispiel)

2000 ml einer wässrigen Phosphor-Rot-Suspension mit einem Gehalt von 1000 g Phosphor-Rot werden in einem Rührreaktor aus Glas auf 60°C erwärmt. Der pH-Wert wird durch Zugabe von 5 %iger Schwefelsäure auf 5 eingestellt. Danach werden 48 g SnSO₄ in 200 ml Wasser dazugeben und es wird 20 min bei 60°C gerührt und anschließend abfiltriert.
Nach der Filtration wird der Filterkuchen mit Wasser gewaschen und bei 120°C im Stickstoffstrom getrocknet. Der Phosphorgehalt beträgt 97,5 %.

### Beispiel 10 (Vergleichsbeispiel)

2000 ml einer wässrigen Phosphor-Rot-Suspension mit einem Gehalt von 1000 g Phosphor-Rot werden in einem Rührreaktor aus Glas auf 60°C erwärmt. Der pH-Wert wird durch Zugabe von 5 %iger Schwefelsäure auf 5 eingestellt. Dann wird eine wässrige Lösung eines Melaminharzes (40 g Madurit MW 909) eingerührt und der pH-Wert mit verdünnter Schwefelsäure auf 4,5 eingestellt. Nach einer Stunde Rühren bei 60°C werden weitere 40 g Madurit MW 909 in ca. 100 ml Wasser gelöst dazugeben. Nach einer Stunde Rühren bei pH 4,5 und 60°C wird abfiltriert.
Nach der Filtration wird der Filterkuchen mit Wasser gewaschen und bei 120°C im Stickstoffstrom getrocknet. Der Phosphorgehalt beträgt 91,8 %.

### Beispiel 11 (Vergleichsbeispiel)

2000 ml einer wässrigen Phosphor-Rot-Suspension mit einem Gehalt von 1000 g Phosphor-Rot werden in einem Rührreaktor aus Glas auf 60°C erwärmt. Der pH-Wert wird durch Zugabe von 5 %iger Schwefelsäure auf 5 eingestellt. Danach werden 48 g SnSO₄ in 200 ml Wasser dazugeben und es wird 20 min bei 60°C gerührt.
Dann wird eine wässrige Lösung eines Melaminharzes (40 g Madurit MW 909) eingerührt und der pH-Wert mit verdünnter Schwefelsäure auf 4,5 eingestellt. Nach einer Stunde Rühren bei 60°C werden weitere 40 g Madurit MW 909 in ca. 100 ml Wasser gelöst dazugegeben. Nach einer Stunde Rühren bei pH 4,5 und 60 C wird abfiltriert.
Nach der Filtration wird der Filterkuchen mit Wasser gewaschen und bei 120°C im Stickstoffstrom getrocknet. Der Phosphorgehalt beträgt 89,8 %.

**Tabelle 1:**

| Eigenschaften des Phosphor-Rot-Pulvers nach den Beispielen 1 bis 11 | | | |
|---|---|---|---|
| Beispiel | Stabilisator | Phosphinbildung* mg PH₃/(g*Tag) | Säurelösliche Phosphorverbindungen * mg P/(g*Tag) |
| 1 | 0,1 % Ag | 0,87 | 34,3 |
| 2 | 0,2 % Ag | 0,02 | 35,6 |
| 3 | 0,3 % Ag | 0,02 | 37,6 |
| 4 | 0,2 % Ag, 2 % SnO* H₂O | 0,02 | 4,8 |
| 5 | 0,2 % Ag, 2 % Mg(OH)₂ | < 0,01 | 33,5 |
| 6 | 0,2 % Ag, 2 % Al(OH)₃ | 0,90 | 16,0 |
| 7 | 0,2 % Ag, 2 % SnO*H₂O 8 % Epoxidharz | < 0,01 | 1,2 |
| 8 | 0,2 % Ag, 2 % SnO*H₂O 8 % Melaminharz | < 0,01 | 0,1 |
| 9 (Vergleich) | 2 % SnO*H₂O | 0,80 | 5,2 |
| 10 (Vergleich) | 8 % Melaminharz | 0,06 | 3,5 |
| 11 (Vergleich) | 2 % SnO*H₂O 8 % Melaminharz | 0,02 | 0,2 |

| | | | |
|---|---|---|---|
| * nach feucht-warmer Lagerung bei 80°C und 100 % Luftfeuchte | | | |

## Patentansprüche

1. Stabilisierter, pulverförmiger roter Phosphor aus Phosphorteilchen mit einer Teilchengröße von höchstens 2 mm, deren Oberfläche mit einer dünnen Schicht eines Oxidationsstabilisators bedeckt ist, **dadurch gekennzeichnet, dass** es sich bei dem Oxidationsstabilisator um Silber handelt.

2. Stabilisierter, pulverförmiger roten Phosphor nach Anspruch 1, **dadurch gekennzeichnet, dass** er 0,05 bis 2, bevorzugt 0,1 bis 0,4 Gew.-% Silber enthält.

3. Stabilisierter, pulverförmiger roten Phosphor nach Anspruch 1 oder 2, **dadurch gekennzeichnet, dass** er zusätzlich einen Stabilisator enthält.

4. Stabilisierter, pulverförmiger roten Phosphor nach einem oder mehreren der Ansprüche 1 bis 3, **dadurch gekennzeichnet, dass** es sich bei dem zusätzliche Stabilisator um ein Metallhydroxid handelt.

5. Stabilisierter, pulverförmiger roten Phosphor nach einem oder mehreren der Ansprüche 1 bis 4, **dadurch gekennzeichnet, dass** als Ausgangsprodukte für das Metallhydroxid die Hydroxide, Oxidhydrate und/oder Oxide von Aluminium, Silicium, Titan, Chrom, Mangan, Zink, Germanium, Zirkon, Niob, Cadmium, Zinn, Blei, Wismut und/oder Cer eingesetzt werden.

6. Stabilisierter, pulverförmiger roten Phosphor nach einem oder mehreren der Ansprüche 1 bis 5, **dadurch gekennzeichnet, dass** der rote Phosphor die Metallhydroxide in Mengen von 0,5 bis 10, bevorzugt 1 bis 3 Gew.-% enthält.

7. Stabilisierter, pulverförmiger roten Phosphor nach einem oder mehreren der Ansprüche 1 bis 6, **dadurch gekennzeichnet, dass** er mit einem duroplastischen Kunstharz mikroverkapselt ist.

8. Stabilisierter, pulverförmiger roten Phosphor nach einem oder mehreren der Ansprüche 1 bis 7, **dadurch gekennzeichnet, dass** es sich bei dem duroplastischen Kunststoff um Epoxidharze, Melaminharze, Phenolharze oder Polyurethane handelt.

9. Stabilisierter, pulverförmiger roten Phosphor nach einem oder mehreren der Ansprüche 1 bis 8, **dadurch gekennzeichnet, dass** der rote Phosphor die duroplastische Kunststoffe in Mengen von 0,2 bis 10, bevorzugt 0,5 bis 8 und besonders bevorzugt 2 bis 5 Gew.-% enthält.

10. Stabilisierter, pulverförmiger roten Phosphor nach einem oder mehreren der Ansprüche 1 bis 9, **dadurch gekennzeichnet, dass** er von einer dünnen Schicht eines Phlegmatisierungsmittel bedeckt ist.

11. Stabilisierter, pulverförmiger roten Phosphor nach einem oder mehreren der Ansprüche 1 bis 10, **dadurch gekennzeichnet, dass** es sich bei dem Phlegmatisierungsmittel um eine wasseremulgierbare organische Verbindung handelt.

12. Stabilisierter, pulverförmiger roten Phosphor nach einem oder mehreren der Ansprüche 1 bis 11, **dadurch gekennzeichnet, dass** es sich bei dem Phlegmatisierungsmittel um Di-2-ethylhexylphthalat oder Polyglykole handelt.

13. Stabilisierter, pulverförmiger roten Phosphor nach einem oder mehreren der Ansprüche 1 bis 12, **dadurch gekennzeichnet, dass** der rote Phosphor das Phlegmatisierungsmittel in Mengen von 0,05 bis 2, bevorzugt 0,3 bis 1,5 Gew.-% enthält.

14. Stabilisierter, pulverförmiger roten Phosphor nach einem oder mehreren der Ansprüche 1 bis 13, **dadurch gekennzeichnet, dass** er
76 bis 99,2 Gew.-% roten Phosphor,
0,05 bis 2 Gew.-% Silber,
0,5 bis 10 Gew.-% Metallhydroxid,
0,2 bis 10 Gew.-% duroplastisches Kunstharz und
0,05 bis 2 Gew.-% Phlegmatisierungsmittel enthält.

15. Verfahren zur Herstellung eines stabilisierten, pulverförmigen roten Phosphors, **dadurch gekennzeichnet, dass** man nacheinander
a) in eine wässrige Suspension des (unbehandelten) roten Phosphors eine wasserlösliche Silberverbindung einrührt und den pH auf 7 einstellt;
b) in diese Suspension eine wasserlösliche Metallverbindung einrührt und den pH auf einen Wert von 4 bis 9 einstellt und noch 0,5 bis 3 Stunden bei 40 bis 80°C rührt;
c) dann eine wässrige Emulsion eines Epoxidharzes und eines Epoxidharz-Härters zufügt und noch 0,5 bis 3 Stunden bei 40 bis 80°C rührt;
d) eine wässrige Emulsion der als Phlegmatisierungsmittel dienenden wasseremulgierbaren organischen Verbindung zufügt und den pH auf einen Wert von 5 bis 9 einstellt und noch 0,5 bis 3 Stunden bei 20 bis 90°C rührt und
e) anschließend das Produkt filtriert und bei Temperaturen von 80 bis 150°C trocknet.

16. Verfahren zur Herstellung eines stabilisierten, pulverförmigen roten Phosphors nach Anspruch 15, **dadurch gekennzeichnet, dass** man die nach Schritt a) erhaltene Emulsion filtriert und den als Produkt erhaltenen silberhaltigen roten Phosphor bei Temperaturen von 80 bis 150°C trocknet.

17. Verfahren zur Herstellung eines stabilisierten, pulverförmigen roten Phosphors nach Anspruch 15, **dadurch gekennzeichnet, dass** man nur die Schritte a) und b) ausführt und den als Produkt erhaltenen silberhaltigen, mit einem Metallhydroxid stabilisierten roten Phosphor bei Temperaturen von 80 bis 150°C trocknet.

18. Verfahren zur Herstellung eines stabilisierten, pulverförmigen roten Phosphors nach Anspruch 15, **dadurch gekennzeichnet, dass** man nur die Schritte a) bis c) ausführt und den als Produkt erhaltenen silberhaltigen, mit einem Metallhydroxid und einem duroplastischen Kunstharz stabilisierten roten Phosphor bei Temperaturen von 80 bis 150°C trocknet.

19. Verfahren zur Herstellung eines stabilisierten, pulverförmigen roten Phosphors nach Anspruch 15, **dadurch gekennzeichnet, dass** man nur die Schritte a), b) und d) ausführt und den als Produkt erhaltenen silberhaltigen, mit einem Metallhydroxid stabilisierten und mit einem Phlegmatisierungsmittel versehenem roten Phosphor bei Temperaturen von 80 bis 150°C trocknet.

20. Verfahren zur Herstellung eines stabilisierten, pulverförmigen roten Phosphors nach einem oder mehreren der Ansprüche 15 bis 19, **dadurch gekennzeichnet, dass** man jeweils und wahlweise
76 bis 99,2 Gew.-% roten Phosphor,
0,05 bis 2 Gew.-% wasserlösliche Silberverbindung,
0,5 bis 10 Gew.-% Metallhydroxid, Metalloxidhydrat oder Metalloxid
0,2 bis 10 Gew.-% duroplastisches Kunstharz und
0,05 bis 2 Gew.-% Phlegmatisierungsmittel einsetzt.

21. Verwendung des stabilisierten, pulverförmigen roten Phosphors nach einem oder mehreren der Ansprüche 1 bis 14 als Flammschutzmittel oder zur Herstellung von Flammschutzmitteln.

## Claims

1. A stabilized, pulverulent red phosphorus material composed of phosphorus particles whose particle size is not more than 2 mm and whose surface has been covered with a thin layer of an oxidation stabilizer, wherein the oxidation stabilizer is silver.

2. The stabilized, pulverulent red phosphorus material as claimed in claim 1, which comprises from 0.05 to 2% by weight, preferably from 0.1 to 0.4% by weight, of silver.

3. The stabilized, pulverulent red phosphorus material as claimed in claim 1 or 2, which comprises an additional stabilizer.

4. The stabilized, pulverulent red phosphorus material as claimed in one or more of claims 1 to 3, wherein the additional stabilizer is a metal hydroxide.

5. The stabilized, pulverulent red phosphorus material as claimed in one or more of claims 1 to 4, wherein the starting materials used for the metal hydroxide comprise the hydroxides, oxide hydrates and/or oxides of aluminum, silicon, titanium, chromium, manganese, zinc, germanium, zirconium, niobium, cadmium, tin, lead, bismuth and/or cerium.

6. The stabilized, pulverulent red phosphorus material as claimed in one or more of claims 1 to 5, which comprises amounts of from 0.5 to 10% by weight, preferably from 1 to 3% by weight, of the metal hydroxides.

7. The stabilized, pulverulent red phosphorus material as claimed in one or more of claims 1 to 6, which has been microencapsulated with a synthetic thermoset resin.

8. The stabilized, pulverulent red phosphorus material as claimed in one or more of claims 1 to 7, wherein the thermoset plastic is an epoxy resin, a melamine resin, a phenolic resin, or a polyurethane.

9. The stabilized, pulverulent red phosphorus material as claimed in one or more of claims 1 to 8, which comprises amounts of from 0.2 to 10% by weight, preferably from 0.5 to 8% by weight, and particularly preferably from 2 to 5% by weight, of the thermoset plastics.

10. The stabilized, pulverulent red phosphorus material as claimed in one or more of claims 1 to 9, which has been covered by a thin layer of a phlegmatizer.

11. The stabilized, pulverulent red phosphorus material as claimed in one or more of claims 1 to 10, wherein the phlegmatizer is a water-emulsifiable organic compound.

12. The stabilized, pulverulent red phosphorus material as claimed in one or more of claims 1 to 11, wherein the phlegmatizer is di-2-ethylhexyl phthalate or polyglycols.

13. The stabilized, pulverulent red phosphorus material as claimed in one or more of claims 1 to 12, which comprises from 0.05 to 2% by weight, preferably from 0.3 to 1.5% by weight, of the phlegmatizer.

14. The stabilized, pulverulent red phosphorus material as claimed in one or more of claims 1 to 13, which comprises
from 76 to 99.2% by weight of red phosphorus,
from 0.05 to 2% by weight of silver,
from 0.5 to 10% by weight of metal hydroxide,
from 0.2 to 10% by weight of synthetic thermoset resin, and
from 0.05 to 2% by weight of phlegmatizer.

15. A process for preparing a stabilized, pulverulent red phosphorus material, which comprises, in succession,
a) stirring a water-soluble silver compound into an aqueous suspension of the (untreated) red phosphorus and adjusting the pH to 7;
b) stirring a water-soluble metal compound into this suspension and adjusting the pH to a value of from 4 to 9, and continuing to stir at from 40 to 80°C for from 0.5 to 3 hours;
c) then adding an aqueous emulsion comprising an epoxy resin and comprising an epoxy resin hardener and continuing to stir at from 40 to 80°C for from 0.5 to 3 hours;
d) adding an aqueous emulsion of the water-emulsifiable organic compound serving as phlegmatizer and adjusting the pH to a value of from 5 to 9, and continuing to stir at from 20 to 90°C for from 0.5 to 3 hours and
e) then filtering the product and drying the same at temperatures from 80 to 150°C.

16. The process for preparing a stabilized, pulverulent red phosphorus material, as claimed in claim 15, wherein the emulsion obtained after step a) is filtered and the resultant silver-containing red phosphorus material is dried at temperatures from 80 to 150°C.

17. The process for preparing a stabilized, pulverulent red phosphorus material, as claimed in claim 15, wherein only steps a) and b) are carried out and the resultant silver-containing red phosphorus material stabilized by a metal hydroxide is dried at temperatures from 80 to 150°C.

18. The process for preparing a stabilized, pulverulent red phosphorus material, as claimed in claim 15, wherein only steps a) to c) are carried out and the resultant silver-containing red phosphorus material stabilized by a metal hydroxide and by a synthetic thermoset resin is dried at temperatures from 80 to 150°C.

19. The process for preparing a stabilized, pulverulent red phosphorus material, as claimed in claim 15, wherein only steps a), b), and d) are carried out and the resultant silver-containing red phosphorus material stabilized by a metal hydroxide and provided with a phlegmatizer is dried at temperatures from 80 to 150°C.

20. The process for preparing a stabilized, pulverulent red phosphorus material as claimed in one of claims 15 to 19, wherein the materials used in each instance comprise, as desired,
from 76 to 99.2% by weight of red phosphorus,
from 0.05 to 2% by weight of water-soluble silver compound,
from 0.5 to 10% by weight of metal hydroxide, metal oxide hydrate, or metal oxide
from 0.2 to 10% by weight of synthetic thermoset resin, and
from 0,05 to 2% by weight of phlegmatizer.

21. The use of the stabilized, pulverulent red phosphorus material as claimed in one or more of claims 1 to 14 as flame retardant or for preparing flame retardants.

## Revendications

1. Phosphore rouge pulvérulent stabilisé, constitué de particules de phosphore ayant une granulométrie d'au plus 2 mm, dont la surface est revêtue d'une couche mince d'un stabilisant à l'oxydation, **caractérisé en ce que**, pour ce qui concerne le stabilisant à l'oxydation, il s'agit d'argent.

2. Phosphore rouge pulvérulent stabilisé selon la revendication 1, **caractérisé en ce qu'**il contient de 0,05 à 2, de préférence de 0,1 à 0,4 % en poids d'argent.

3. Phosphore rouge pulvérulent stabilisé selon la revendication 1 ou 2, **caractérisé en ce qu'**il contient en outre un stabilisant.

4. Phosphore rouge pulvérulent stabilisé selon l'une ou plusieurs des revendications 1 à 3, **caractérisé en ce que**, pour ce qui concerne le stabilisant supplémentaire, il s'agit d'un hydroxyde métallique.

5. Phosphore rouge pulvérulent stabilisé selon l'une ou plusieurs des revendications 1 à 4, **caractérisé en ce qu'**on utilise en tant que produits de départ pour l'hydroxyde métallique les hydroxydes, oxyhydrates et/ou oxydes d'aluminium, de silicium, de titane, de chrome, de manganèse, de zinc, de germanium, de zirconium, de niobium, de cadmium, d'étain, de plomb, de bismuth et/ou de cérium.

6. Phosphore rouge pulvérulent stabilisé selon l'une ou plusieurs des revendications 1 à 5, **caractérisé en ce que** le phosphore rouge contient les hydroxydes métalliques en des quantités de 0,5 à 10 et de préférence de 1 à 3 % en poids.

7. Phosphore rouge pulvérulent stabilisé selon l'une ou plusieurs des revendications 1 à 6, **caractérisé en ce qu'**il est micro-encapsulé dans une résine synthétique thermodurcissable.

8. Phosphore rouge pulvérulent stabilisé selon l'une ou plusieurs des revendications 1 à 7, **caractérisé en ce que**, pour ce qui concerne la matière plastique thermodurcissable, il s'agit de résines époxydes, de résines de mélamine, de résines phénoliques ou de polyuréthannes.

9. Phosphore rouge pulvérulent stabilisé selon l'une ou plusieurs des revendications 1 à 8, **caractérisé en ce que** le phosphore rouge contient les matières plastiques thermodurcissables en des quantités de 0,2 à 10, de préférence de 0,5 à 8 et plus particulièrement de 2 à 5 % en poids.

10. Phosphore rouge pulvérulent stabilisé selon l'une ou plusieurs des revendications 1 à 9, **caractérisé en ce qu'**il est recouvert d'une couche mince d'un flegmatisant.

11. Phosphore rouge pulvérulent stabilisé selon l'une ou plusieurs des revendications 1 à 10, **caractérisé en ce que**, pour ce qui concerne le flegmatisant, il s'agit d'un composé organique émulsionnable à l'eau.

12. Phosphore rouge pulvérulent stabilisé selon l'une ou plusieurs des revendications 1 à 11, **caractérisé en ce que**, pour ce qui concerne le flegmatisant, il s'agit de phtalate de di-2-éthylhexyle ou de polyglycols.

13. Phosphore rouge pulvérulent stabilisé selon l'une ou plusieurs des revendications 1 à 12, **caractérisé en ce que** le phosphore rouge contient le flegmatisant en des quantités de 0,05 à 2 et de préférence de 0,3 à 1,5 % en poids.

14. Phosphore rouge pulvérulent stabilisé selon l'une ou plusieurs des revendications 1 à 13, **caractérisé en ce qu'**il contient
76 à 99,2 % en poids de phosphore rouge,
0,05 à 2 % en poids d'argent,
0,5 à 10 % en poids d'un hydroxyde métallique,
0,2 à 10 % en poids d'une résine synthétique thermodurcissable et
0,05 à 2 % en poids d'un flegmatisant.

15. Procédé de préparation d'un phosphore rouge pulvérulent stabilisé, **caractérisé en ce que**, successivement,
a) on délaye dans une suspension aqueuse du phosphore rouge (non traité) un composé de l'argent soluble dans l'eau, et on ajuste le pH à 7 ;
b) on délaye dans cette suspension un composé métallique soluble dans l'eau, et on ajuste le pH à une valeur de 4 à 9, et on agite encore pendant 0,5 à 3 heures à une température de 40 à 80°C ;
c) puis on ajoute une émulsion aqueuse d'une résine époxyde et d'un durcisseur de résine époxyde, et on agite encore pendant 0,5 à 3 heures à une température de 40 à 80°C ;
d) on ajoute une émulsion aqueuse du composé organique émulsionnable à l'eau servant de flegmatisant, et on ajuste le pH à une valeur de 5 à 9, et on agite encore pendant 0,5 à 3 heures à une température de 20 à 90°C, et
e) on filtre ensuite le produit, et on le sèche à des températures de 80 à 150°C.

16. Procédé de préparation d'un phosphore rouge pulvérulent stabilisé selon la revendication 15, **caractérisé en ce qu'**on filtre l'émulsion obtenue dans l'étape a), et on sèche à des températures de 80 à 150°C le phosphore rouge contenant de l'argent et obtenu en tant que produit.

17. Procédé de préparation d'un phosphore rouge pulvérulent stabilisé selon la revendication 15, **caractérisé en ce qu'**on n'exécute que les étapes a) et b), et on sèche à des températures de 80 à 150°C le phosphore rouge stabilisé par un oxyde métallique, contenant de l'argent et obtenu en tant que produit.

18. Procédé de préparation d'un phosphore rouge pulvérulent stabilisé selon la revendication 15, **caractérisé en ce qu'**on n'exécute que les étapes a) à c), et on sèche à des températures de 80 à 150°C le phosphore rouge stabilisé par un hydroxyde métallique et une résine synthétique thermodurcissable, contenant de l'argent et obtenu en tant que produit.

19. Procédé de préparation d'un phosphore rouge pulvérulent stabilisé selon la revendication 15, **caractérisé en ce qu'**on n'exécute que les étapes a), b) et d), et on sèche à des températures de 80 à 150°C phosphore rouge, stabilisé par un hydroxyde métallique et pourvu d'un flegmatisant, contenant de l'argent et obtenu en tant que produit.

20. Procédé de préparation d'un phosphore rouge pulvérulent stabilisé selon l'une ou plusieurs des revendications 15 à 19, **caractérisé en ce qu'**on utilise dans chaque cas, et au choix
76 à 99,2 % en poids de phosphore rouge,
0,05 à 2 % en poids d'un composé de l'argent soluble dans l'eau,
0,5 à 10 % en poids d'un hydroxyde métallique, d'un oxyhydrate métallique ou d'un oxyde métallique,
0,2 à 10 % en poids d'une résine synthétique thermodurcissable, et
0,05 à 2 % en poids d'un flegmatisant.

21. Utilisation du phosphore rouge pulvérulent stabilisé selon l'une ou plusieurs des revendications 1 à 14 en tant qu'agent d'ignifugation ou pour préparer des agents d'ignifugation.
